# EUROPÄISCHE PATENTANMELDUNG

(11) **EP 4 245 503 A1**
(43) Veröffentlichungstag der Anmeldung: **20.09.2023**
(21) Anmeldenummer: 22215117.7
(22) Anmeldetag: 20.12.2022
(51) Int. Cl.: B29C 49/42, B29C 49/64, B29C 49/06, B29C 49/68, B29K 67/00, B29L 31/00

(54) **VERFAHREN UND VORRICHTUNG ZUM HERSTELLEN VON KUNSTSTOFFBEHÄLTNISSEN MIT NICHT KREISFÖRMIGEM QUERSCHNITT**

(30) Priorität: 08.03.2022 DE 102022105331
(71) Anmelder: Krones AG, 93073 Neutraubling (DE)
(72) Erfinder: Steger, Sebastian, 93073 Neutraubling (DE)
(74) Vertreter: Hannke Bittner & Partner mbB Regensburg

(57) **Zusammenfassung**

Verfahren zum Herstellen von Kunststoffbehältnissen, wobei Kunststoffvorformlinge (10) mittels einer Erwärmungseinrichtung (1) erwärmt werden und anschließend diese erwärmten Kunststoffvorformlinge (10) zu den Kunststoffbehältnissen (15) umgeformt werden, wobei die Kunststoffvorformlinge während ihrer Erwärmung entlang eines vorgegebenen Transportpfads (T1, T2) transportiert werden und wobei die Kunststoffvorformlinge während des Transports entlang eines ersten Transportpfadabschnitts (T1) bezüglich ihrer Längsachse rotiert werden um auf diese Weise eine gleichmäßige Erwärmung der Kunststoffvorformlinge in Umfangsrichtung zu erreichen und wobei die Kunststoffvorformlinge während ihres Transports entlang eines zweiten Transportpfadabschnitts (T2) wenigstens abschnittsweise in einer vorgegebenen ersten Drehstellung bezüglich ihrer Längsachse verbleiben so dass erste vorgegebene Umfangsabschnitte (A1, A3) der Kunststoffvorformlinge (10) unterschiedlich erwärmt werden als zweite vorgegebene Umfangsabschnitte (A2, A4) der Kunststoffvorformlinge, dadurch gekennzeichnet, dass die Kunststoffvorformlinge während ihres Transports entlang des zweiten Transportpfadabschnittes (T2) wenigstens abschnittsweise in einer vorgegebenen zweiten Drehstellung bezüglich ihrer Längsachse verbleiben wobei sich die erste und die zweite Drehstellung um einen vorgegebenen Differenzwinkel voneinander unterscheiden.

## Beschreibung

Die vorliegende Erfindung bezieht sich auf ein Verfahren und eine Vorrichtung zum Herstellen von Kunststoffbehältnissen. Aus dem Stand der Technik für derartige Verfahren seit langem bekannt. Üblicherweise wird zunächst ein Kunststoffvorformling erwärmt und anschließend in einer Umformungseinrichtung, wie beispielsweise einer Streckblasmaschine, zu einem Kunststoffbehältnis umgeformt. Auf dem Markt sind teilweise auch Behältnisse gewünscht, welche einen von einem kreisförmigen Querschnitt abweichenden Querschnitt wie etwa einen ovalen Querschnitt aufweisen. Zu diesem Zweck ist es möglich, ovale Blasformen einzusetzen, welche entsprechend ein ovales Behältnis ausbilden.

Allerdings muss in solchen Fällen auch der Erwärmungsprozess angepasst werden. Zur Produktion ungleichmäßig geformter und insbesondere ovaler Behältnisse kommt im Stand der Technik das sogenannte Preferential-Heating-Verfahren zur Anwendung. Dabei werden die beiden Seiten des Kunststoffvorformlings, welche zu den langen Behältnisseiten umgeformt werden, stärker erwärmt als die beiden Seiten des Kunststoffvorformlings, welche zu kurzen Behältnisseiten umgeformt werden sollen.

Zu diesem Zweck ist es bekannt, dass im Laufe des Erwärmungsprozesses die Kunststoffvorformlinge zunächst mit einer gleichförmigen Grunderwärmung versehen werden und dann bestimmte Bereiche des Kunststoffvorformlings stärker erwärmt werden. So ist beispielsweise ein Preferential-Heating mit vergleichbarem Wärmeeintrag auf je zwei gegenüberliegenden Seiten bekannt. Diese zwei gegenüberliegenden, dann wärmeren Seiten des Kunststoffvorformlings führen zu zwei gleich verstreckten längeren Behältnisseiten. Die beiden gegenüberliegenden kürzeren Seiten führen zu zwei gleich verstreckten kürzeren Behältnisseiten.

Daneben ist es prinzipiell auch möglich, ein sogenanntes Preferential-Heating mit abweichenden Wärmeeintrag auf zwei gegenüberliegenden Seiten zu den beiden anderen Seiten mit vergleichbarem Wärmeeintrag vorzusehen. Auf diese Weise können ovale jedoch nicht symmetrische Behältnisse erzeugt werden. In diesem Falle können beispielsweise zwei gegenüberliegende Seiten am Kunststoffvorformling mit einer höchsten und einer mittleren Temperatur beaufschlagt werden und führen auf diese Weise zu zwei ungleich verstreckten langen Behältnisseiten. Zwei gegenüberliegende Seiten am Kunststoffvorformling können hingegen mit einer niedrigeren Temperatur beaufschlagt werden und führen auf diese Weise zu zwei gleich verstreckten kurzen Behältnisseiten.

Auf diese Weise können ovale Behältnisse oder auch ovale Behältnisse mit einem zugleich auf der langen Behältnisseite asymmetrischen Verlauf erzeugt werden.

Bei einem entsprechend bekannten Verfahren werden die Kunststoffvorformlinge zunächst durch eine Heizgasse geführt, in welcher sie einseitig bestrahlt und zugleich rotiert werden, um das erforderliche thermische Grundniveau zu erreichen. Anschließend wird die Rotation gestoppt und die Kunststoffvorformlinge werden durch eine Heizgasse mit beidseitiger Bestrahlung geführt. Sollte es erforderlich sein, dass die in diesem Zuge erwärmten Seiten der Kunststoffvorformlinge nicht die gleiche Temperatur aufweisen, so ist dies über eine Strahlerleistungssteuerungstechnik leicht umsetzbar.

Zum Teil wäre jedoch auch die Herstellung von ungleichmäßig geformten und insbesondere ovalen Behältnissen gewünscht, welche eine asymmetrisch ausgestaltete kurze Behälterseite aufweisen.

Der vorliegenden Erfindung liegt daher die Aufgabe zugrunde, ein Verfahren und eine Vorrichtung zur Verfügung zu stellen, welche die Herstellung von Kunststoffbehältnissen erlauben, welche einen von einem kreisförmigen Querschnitt abweichenden Querschnitt aufweisen, wobei insbesondere diese Behältnisse an der kurzen Behälterseite asymmetrisch ausgebildet sind. Diese erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Herstellen von Kunststoffbehältnissen werden Kunststoffvorformlinge mittels einer Erwärmungseinrichtung erwärmt und anschließend diese erwärmten Kunststoffvorformlinge zu den Kunststoffbehältnissen umgeformt. Dabei werden diese Kunststoffvorformlinge während ihrer Erwärmung entlang eines vorgegebenen Transportpfads transportiert und die Kunststoffvorformlinge werden während des Transports entlang eines ersten Transportpfadabschnitts bezüglich ihrer Längsachse rotiert, um auf diese Weise eine gleichmäßige (Grund) Erwärmung der Kunststoffvorformlinge (insbesondere in deren Umfangsrichtung) zu erreichen.

Weiterhin werden die Kunststoffvorformlinge während ihres Transports entlang eines zweiten Transportpfadabschnitts wenigstens abschnittsweise im wesentlichen in einer vorgegebenen ersten Drehstellung bezüglich ihrer Längsachse verbleiben und/oder gehalten, sodass erste vorgegebene Umfangsabschnitte der Kunststoffvorformlinge unterschiedlich (d.h. insbesondere stärker oder weniger stark) erwärmt werden als zweite vorgegebene Umfangsabschnitte der Kunststoffvorformlinge.

Erfindungsgemäß werden die Kunststoffvorformlinge während ihres Transports entlang des zweiten Transportpfadabschnitts wenigstens abschnittsweise im wesentlichen in einer vorgegebenen zweiten Drehstellung bezüglich ihrer Längsachse verbleiben und/oder gehalten, wobei sich die erste und die zweite Drehstellung um einen vorgegebenen Differenzwinkel voneinander unterscheiden.

Unter einem Halten der Kunststoffvorformlinge in einer bestimmten Drehstellung wird dabei verstanden, dass diese zwar weiter entlang ihres Transportpfads transportiert werden, während dieses Transports nicht um ihre Längsachsen gedreht werden. Unter einem im wesentlichen in dieser Drehstellung verbleiben wird verstanden, dass die Kunststoffvorformlinge genau in dieser Drehstellung verbleiben. Es wäre jedoch auch denkbar, dass die Kunststoffvorformling sehr langsam gedreht werden, beispielsweise entlang dieses Abschnitts der Erwärmung nur um wenige Grad gedreht werden.

Es wird also vorgeschlagen, dass die Kunststoffvorformlinge in wenigstens zwei unterschiedlichen Drehstellungen gehalten und bevorzugt auch in diesen Drehstellungen erwärmt werden. Besonders bevorzugt werden die Kunststoffvorformlinge während ihres Transports aus wenigstens einer und bevorzugt wenigstens zwei Vorzugsrichtungen erwärmt. Bei diesen Vorzugsrichtungen handelt es sich insbesondere um Richtungen, die senkrecht zu dem Transportpfad der Kunststoffvorformlinge stehen. Auf diese Weise werden einige Abschnitte der Umfangswandung der Kunststoffvorformlinge stärker erwärmt als andere Abschnitte.

Auf diese Weise werden insgesamt einander gegenüberliegende Umfangsabschnitte im Ergebnis unterschiedlich erwärmt und auf diese Weise werden unterschiedliche lange Seiten eines Querschnittsprofils der Kunststoffbehältnisse erzeugt.

Bevorzugt werden die Kunststoffvorformlinge zwischen dem ersten Transportpfadabschnitt und dem zweiten Transportpfadabschnitt durch einen Übergabeabschnitt transportiert. Bevorzugt wird in diesem Übergabeabschnitt eine Bewegungsrichtung der Kunststoffvorformlinge umgelenkt und insbesondere um 180° umgelenkt. Besonders bevorzugt erfolgt in diesem Übergangsabschnitt keine Erwärmung der Kunststoffvorformlinge.

Bevorzugt werden die Kunststoffvorformlinge an stationär angeordneten Erwärmungseinheiten vorbeitransportiert und diese geben infrarote Strahlung ab, um die Kunststoffvorformlinge zu erwärmen. Zu diesem Zweck können diese Erwärmungseinheiten, wie an sich aus dem Stand der Technik bekannt, Strahler und insbesondere Infrarotstrahler aufweisen, welche eine die Kunststoffvorformlinge erwärmende Strahlung abgeben.

Besonders bevorzugt verlaufen der erste Transportpfadabschnitt und/oder der zweite Transportpfadabschnitt im Wesentlichen und insbesondere vollständig geradlinig. Besonders bevorzugt werden die Kunststoffvorformlinge mittels einer umlaufenden Transporteinrichtung transportiert. Besonders bevorzugt werden die Kunststoffvorformlinge vereinzelt transportiert. Bevorzugt werden die Kunststoffvorformlinge von Halteeinrichtungen gehalten. Bei diesen Halteeinrichtungen kann es sich insbesondere um Haltedorne handeln, welche in die Mündungen der Kunststoffvorformlinge einführbar sind. Besonders bevorzugt werden diese Halteeinrichtungen d. h. hier die Haltedorne auch gemeinsam wenigstens abschnittsweise mit den von ihren gehaltenen Kunststoffvorformlingen bezüglich einer Längsrichtung der Kunststoffvorformlinge gedreht.

Bevorzugt werden die Kunststoffvorformlinge durch Beaufschlagung mit Strahlung und insbesondere Infrarotstrahlung erwärmt.

Bei einer weiteren bevorzugten Ausführungsform ist der Differenzwinkel größer als 20°, bevorzugt größer als 40°, bevorzugt größer als 60°, bevorzugt größer als 70° und besonders bevorzugt größer als 80°. Bei einer weiteren bevorzugten Ausführungsform ist der Differenzwinkel kleiner als 160°, bevorzugt kleiner als 140°, bevorzugt kleiner als 120°, bevorzugt kleiner als 110° und besonders bevorzugt kleiner als 100°.

Besonders bevorzugt liegt der Differenzwinkel im Wesentlichen und insbesondere genau bei 90°. Auf diese Weise können die oben erwähnten, speziellen Symmetrien erreicht werden. Jedoch konnten auch die anderen Referenzwinkel interessant sein, um individuell auf Kundenwünsche hinsichtlich des Querschnittsprofils der Behältnisse einzugehen.

Bevorzugt werden die Kunststoffvorformlinge zunächst in der ersten Drehstellung gehalten (jedoch weiterhin entlang des Transportpfads transportiert) danach um einen vorgegebenen Winkel gedreht und anschließend in der zweiten Drehstellung gehalten (jedoch weiterhin entlang des Transportpfads transportiert).

Besonders bevorzugt schließt sich der zweite Transportpfadabschnitt an den ersten Transportpfadabschnitt an.

Besonders bevorzugt werden die Kunststoffvorformlinge mittels einer mechanisch wirkenden Stelleinrichtung von der ersten Drehstellung in die zweite Drehstellung gedreht. Besonders bevorzugt werden die Kunststoffvorformlinge auch mittels einer mechanischen Stelleinrichtung in die erste Drehstellung gedreht.

Bei einem weiteren bevorzugten Verfahren werden die Kunststoffvorformlinge von der mechanischen Stelleinrichtung in der ersten Drehstellung gehalten und werden auch in dieser ersten Drehstellung transportiert. Bei einem weiteren bevorzugten Verfahren werden die Kunststoffvorformlinge von der mechanischen Stelleinrichtung in der zweiten Drehstellung gehalten und werden auch in dieser zweiten Drehstellung transportiert.

Besonders bevorzugt werden während des Transports der Kunststoffvorformlinge in dem zweiten Transportpfadabschnitt einander gegenüberliegende Umfangsabschnitte wenigstens abschnittsweise unterschiedlich erwärmt. Dies kann beispielsweise durch eine unterschiedliche Heizleistung von Erwärmungseinheiten, welche sich insbesondere seitlich neben des Transportpfads der Kunststoffvorformlinge befinden erreicht werden.

Bevorzugt werden die Kunststoffvorformlinge in diesem Bereich durch eine Heizgasse transportiert und auf beiden Seiten dieser Heizgasse sind insbesondere stationär angeordnete Erwärmungseinheiten angeordnet. Eine unterschiedliche Erwärmung kann auf diese Weise durch eine unterschiedliche Strahlerleistung der Erwärmungseinheiten erreicht werden.

Bei einem weiteren bevorzugten Verfahren formt die Umformungseinrichtung aus den Kunststoffvorformlingen Kunststoffbehältnisse mit einem von einem kreisförmigen Querschnitt abweichenden Querschnitt. Insbesondere handelt es sich dabei um Kunststoffbehältnisse mit einem ovalen Querschnitt, wobei besonders bevorzugt die einander gegenüberliegenden kurzen Abschnitte dieses Querschnitts nicht symmetrisch bezüglich der Längsachse der Behältnisse ausgebildet sind. Besonders bevorzugt verläuft die Längsachse des Behältnisses symmetrisch bezüglich einer Mündung des Behältnisses.

Bei einem weiteren bevorzugten Verfahren werden die Kunststoffvorformlinge wenigstens abschnittsweise während ihres Transports und/oder während ihrer Erwärmung entlang des Transportpfads an ihrer Außenoberfläche gekühlt. Insbesondere erfolgt dabei eine Kühlung durch Luft. Auf diese Weise wird eine gleichmäßige Erwärmung der Umfangswandung der Kunststoffvorformlinge erreicht. Diese Vorgehensweise hat sich insbesondere bei den hier beschriebenen nicht kreisförmig ausgebildeten Behältnissen als besonders vorteilhaft erwiesen, da unterschiedliche Wandungsabschnitte der gefertigten Kunststoffbehältnisse eine unterschiedliche Wandstärke aufweisen können.

Bei einer weiteren bevorzugten Ausführungsform erfasst eine Erfassungseinrichtung eine Drehstellung der Kunststoffvorformlinge bezüglich deren Längsrichtung. In manchen Anwendungen kann es sinnvoll sein, die Kunststoffvorformlinge bzw. deren Gewinde genau auszurichten, da die gefertigten Kunststoffbehältnisse auch noch auf bestimmte insbesondere ovale Behältnisverschlüsse anzupassen sind. Besonders bevorzugt erfasst die Erfassungseinrichtung die Drehstellung der Kunststoffvorformlinge anhand einer Markierung der Kunststoffvorformlinge. Auf diese Weise kann beispielsweise eine Drehstellung des Kunststoffvorformlings bereits vor dem Erwärmungsvorgang oder insbesondere bevor das sog. Preferential-Heating erfolgt ausgerichtet werden. Besonders bevorzugt kann dabei eine Ausrichtung des Kunststoffvorformlings gegenüber seiner Halteeinrichtung erfolgen, oder aber eine Ausrichtung des Kunststoffvorformlings, der an der Halteeinrichtungen wie etwa einem Haltedorn angeordnet ist.

Die vorliegende Erfindung ist weiterhin auf eine Vorrichtung zum Herstellen von Kunststoffbehältnissen gerichtet. Diese weist eine Erwärmungseinrichtung auf, welche Kunststoffvorformlinge erwärmt, wobei die Erwärmungseinrichtung eine Transporteinrichtung aufweist, welche die Kunststoffvorformlinge während ihrer Erwärmung entlang eines vorgegebenen Transportpfads transportiert, und wobei die Erwärmungseinrichtung wenigstens eine und bevorzugt eine Vielzahl von Erwärmungseinheiten aufweist, welche die Kunststoffvorformlinge durch Beaufschlagung mit elektromagnetischer Strahlung erwärmen, und wobei die Erwärmungseinrichtung eine Dreheinrichtung aufweist, welche die Kunststoffvorformlinge während ihres Transports entlang eines ersten Transportpfadabschnitts bezüglich ihrer Längsachse rotiert, um auf diese Weise eine gleichmäßige Erwärmung der Kunststoffvorformlinge zu erreichen.

Weiterhin erweist die Erwärmungseinrichtung eine Stelleinrichtung auf, welche bewirkt, dass die Kunststoffvorformlinge während ihres Transports entlang eines zweiten Transportpfadabschnitts wenigstens abschnittsweise in einer vorgegebenen ersten und insbesondere festen Drehstellung bezüglich ihrer Längsachse transportiert werden, sodass erste vorgegebene Umfangsabschnitte der Kunststoffvorformlinge unterschiedlich erwärmt werden als zweite vorgegebene Umfangsabschnitte der Kunststoffvorformlinge.

Erfindungsgemäß bewirkt die Stelleinrichtung, dass die Kunststoffvorformlinge während ihres Transports entlang des zweiten Transportpfadabschnitts wenigstens abschnittsweise in einer vorgegebenen zweiten (insbesondere festen) Drehstellung bezüglich ihrer Längsachse transportiert werden, wobei sich die erste und die zweite Drehstellung um einen vorgegebenen Differenzwinkel voneinander unterscheiden.

Es wird also auch im Hinblick auf die Vorrichtung vorgeschlagen, dass die Kunststoffvorformlinge zumindest in zwei unterschiedlichen (und insbesondere festen) Drehstellungen abschnittsweise transportiert und auf diese Weise an bevorzugten Oberflächenbereichen stärker erwärmt werden als an anderen.

Besonders bevorzugt handelt es sich bei der Dreheinrichtung um eine mechanisch wirkende Dreheinrichtung. Besonders bevorzugt bewirkt diese Dreheinrichtung eine gleichförmige Drehung aller Kunststoffvorformlinge zumindest während des Transports in dem ersten Transportpfadabschnitt. Dabei kann diese Dreheinrichtung beispielsweise eine Zahnstange aufweisen, der gegenüber die Kunststoffvorformlinge bzw. Zahnräder (die mit den Halteeinrichtungen der Kunststoffvorformlinge gekoppelt sind) abrollen bzw. mit der sie ineinandergreifen.

Besonders bevorzugt handelt es sich bei den Erwärmungseinheiten um Infrarot Erwärmungseinheiten.

Besonders bevorzugt weist die Transporteinrichtung eine Vielzahl von Halteeinrichtungen auf. Diese sind besonders bevorzugt drehbar gelagert und weisen besonders bevorzugt eine Führungsrolle auf. Diese Führungsrolle kann dabei wie unten genauer beschrieben, mit einer Führungskurve zusammenwirken, um die Kunststoffvorformlinge in einer bestimmten Drehstellung zu halten.

Besonders bevorzugt weist die Stelleinrichtung wenigstens eine (insbesondere in der Transportrichtung und/oder wenigstens in einem Arbeitsbetrieb der Vorrichtung) stationär angeordnete Führungskurve auf, welche einen Transport der Kunststoffvorformlinge in einer vorbestimmten Drehstellung ermöglicht. Wie erwähnt, wirkt bevorzugt diese Führungskurve mit einer Kurvenrolle, welche an die Halteeinrichtungen gekoppelt ist, zusammen.

Die Führungskurve ist bevorzugt als Ganzes (also sowohl der erste als auch der zweite Abschnitt) zur Steuerung bzw. Regelung des Übergabewinkels verschieblich angeordnet. Es könnte auch sinnvoll sein, dass der zweite relativ zum ersten Abschnitt verschiebbar ist und zugleich beide Abschnitte gemeinsam relativ zum Maschinengestell verschiebbar sind bzw. dass alle Kurvenabschnitte unabhängig voneinander einzeln gegenüber dem Maschinengestell verschiebbar sind.

Bevorzugt weist ist die Stelleinrichtung wenigstens eine Führungskurve auf, welche nicht mit der Transporteinrichtung (zum Transport der Kunststoffvorformlinge) mitbewegt wird.

Bei einer bevorzugten Ausführungsform weist die Führungskurve wenigstens drei aufeinanderfolgende Kurvenabschnitte auf, wobei bevorzugt einer dieser Kurvenabschnitte ein Fangkurvenabschnitt ist, welcher eine Drehstellung der Kunststoffvorformlinge ausrichtet, wenigstens ein Kurvenabschnitt ein erster Haltekurvenabschnitt ist, der die Kunststoffvorformlinge während ihres Transports in der ersten Drehstellung hält und wenigstens ein Kurvenabschnitt ein zweiter Haltekurvenabschnitt ist, der die Kunststoffvorformlinge während ihres Transports in der zweiten Drehstellung hält. Damit wird hier vorgeschlagen, dass die Anpassung der Drehstellung der Kunststoffvorformlinge mechanisch unter Verwendung von Führungskurven erfolgt.

Es wird darauf hingewiesen, dass es auch denkbar wäre, jede einzelne Halteeinrichtung mit einem eigenen beispielsweise elektrischen Antrieb auszugestalten, sodass auf diese Weise die Drehstellung der Kunststoffvorformlinge angepasst werden könnte. Da jedoch derartige Öfen eine Vielzahl von Halteeinrichtungen aufweisen, wäre diese Vorgehensweise mit relativ hohen Kosten verbunden.

Bei einer bevorzugten Ausführungsform weist die Führungskurve einen Überführungsabschnitt auf, der die Kunststoffvorformlinge von der ersten Drehstellung in die zweite Drehstellung dreht. Dabei können beispielsweise die Kunststoffvorformlinge mittels einer Führungskurve bzw. des Überführungsabschnitts definiert um einen bestimmten Winkel, beispielsweise um 90° gedreht werden. Bei einer bevorzugten Ausführungsform weist die Führungskurve einen weiteren Überführungsabschnitt auf, der die Kunststoffvorformlinge (10) von der zweiten Drehstellung in eine weitere und insbesondere in wieder in die erste Drehstellung dreht.

Bei einer bevorzugten Ausführungsform ist wenigstens ein Führungskurvenabschnitt in einer Richtung verstellbar, welche senkrecht zu dem Transportpfad der Kunststoffvorformlinge steht und welche bevorzugt auch senkrecht zu der Längsrichtung der Kunststoffvorformlinge steht. Auf diese Weise können die einzustellenden Drehstellungen angepasst und/oder verändert werden.

Besonders bevorzugt sind wenigstens abschnittsweise in dem zweiten Transportpfadabschnitt wenigstens einseitig und bevorzugt beidseitig des Transportpfads der Kunststoffvorformlinge Erwärmungseinheiten angeordnet. Dabei sind besonders bevorzugt diese Erwärmungseinheiten unabhängig voneinander steuerbar. Auf diese Weise kann von den beiden unterschiedlichen Seiten her eine unterschiedliche Erwärmung der Kunststoffvorformlinge erfolgen.

Bei einer weiteren bevorzugten Ausführungsform weist die Vorrichtung wenigstens eine Inspektionsseinrichtung auf, welche dazu geeignet und bestimmt ist, eine Drehstellung der Kunststoffvorformlinge bezüglich ihrer Längsrichtung zu erfassen. Besonders bevorzugt handelt es sich hierbei um eine optische Inspektionseinrichtung, welche beispielsweise eine Bildaufnahmeeinrichtung aufweist, welche ein Bild des Kunststoffvorformlings aufnimmt. Besonders bevorzugt kann dabei die Drehstellung der Kunststoffvorformlinge anhand einer an dieser angeordneten Markierung erfasst werden. Besonders bevorzugt erfasst diese Inspektionsseinrichtung die Drehstellung der Kunststoffvorformlinge berührungslos.

Bei einer weiteren vorteilhaften Ausführungsform weist die Vorrichtung eine Umformungseinrichtung auf, welche die von der Erwärmungseinrichtung erwärmten Kunststoffvorformlinge zu Kunststoffbehältnissen umformt, wobei diese Umformungseinrichtung bevorzugt dazu geeignet und bestimmt ist, Kunststoffvorformlinge mit einem von einem kreisförmigen Querschnitt abweichenden Querschnitt herzustellen. Bevorzugt handelt es sich bei dieser Umformungseinrichtung um eine Blasmaschine und insbesondere um eine Streckblasmaschine.

Insbesondere handelt es sich bei diesem Querschnitt um einen ovalen Querschnitt der Kunststoffvorformlinge und insbesondere auch um einen sowohl ovalen als auch bezüglich wenigstens zweier Seiten der Behältnisse asymmetrischen Profil. Dies wird genauer unter Bezugnahme auf die Figuren erläutert.

Weitere Vorteile und Ausführungsformen ergeben sich aus den beigefügten Zeichnungen.

Darin zeigen:
- Fig. 1: eine schematische Darstellung einer erfindungsgemäßen Vorrichtung;
- Fig. 2: eine Darstellung einer Halteeinrichtung zum Halten der Kunststoffvorformlinge;
- Fig. 3: eine Draufsicht auf die Halteeinrichtung aus Figur 2;
- Fig. 4: eine Detaildarstellung der Erwärmungseinrichtung;
- Fig. 5: eine Darstellung der Stelleinrichtung zum Ändern der Drehstellung der Kunststoffvorformlinge;
- Fig. 6: eine Darstellung zur Veränderung der Drehstellung der Kunststoffvorformlinge;
- Fig. 7: eine weitere Darstellung einer Halteeinrichtung zum Halten der Kunststoffvorformlinge;
- Fig. 8: eine Draufsicht auf die Halteeinrichtung aus Figur 7;
- Fig. 9a,b: eine Veranschaulichung zur Herstellung eines Behältnisses;
- Fig. 10a,b: eine Veranschaulichung zur Herstellung eines Kunststoffbehältnisses mit asymmetrischem Querschnitt;
- Fig. 11: eine schematische Darstellung einer Vorrichtung zur Herstellung eines Kunststoffbehältnisses mit asymmetrischem Querschnitt;
- Fig. 12a, b: eine Veranschaulichung zur Herstellung eines Kunststoffbehältnisses mit asymmetrischem Querschnitt an den kurzen Seiten;
- Fig. 13: eine Darstellung zur Veranschaulichung des in Fig. 12b gezeigten Kunststoffbehältnisses; und
- Fig. 14: eine Führungskurvenanordnung zur Erzeugung des in Fig. 12b gezeigten Kunststoffbehältnisses.

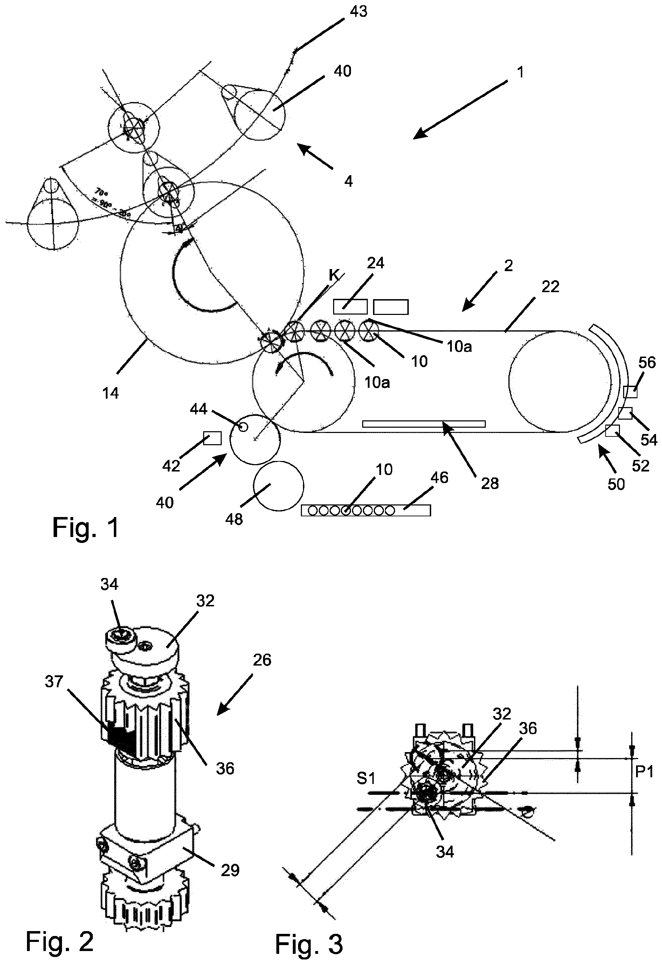

Die Figuren 1 - 8 zeigen eine Vorrichtung zum Herstellen von Behältnissen nach dem internen Stand der Technik und dienen zur Veranschaulichung der Erfindung. Es wird jedoch darauf hingewiesen, dass sämtliche Merkmale der in den Figuren 1 - 8 gezeigten Vorrichtung auch mit der Erfindung verwendet werden können.

Figur 1 zeigt eine schematische Darstellung einer Vorrichtung 1 zum Herstellen von Behältnissen. Dabei bezieht sich das Bezugszeichen 2 auf eine Erwärmungseinrichtung wie einen Ofen, welcher Kunststoffvorformlinge 10 erwärmt. Bevorzugt handelt es sich dabei um eine Infrarot - Erwärmungseinrichtung. Diese Erwärmungseinrichtung weist eine nur schematisch dargestellte Transporteinrichtung 22 auf, welche hier als umlaufende Kette ausgebildet ist, an der eine Vielzahl von Halteeinrichtungen (nicht gezeigt) zum Halten der Kunststoffvorformlinge 10 angeordnet ist.

Das Bezugszeichen 24 kennzeichnet eine Erwärmungseinheit wie etwa einen Heizkasten, der bevorzugt stationär angeordnet ist, und an dem die Kunststoffvorformlinge vorbei transportiert werden. Bei einer bevorzugten Ausführungsform sind auch an der Innenseite des Transportpfads Heizeinheiten vorgesehen.

Bei einer bevorzugten Ausführungsform weist die Erwärmungseinrichtung auch Kühleinrichtungen auf, welche dazu geeignet sind, eine Oberfläche der Kunststoffvorformlinge zu Kühlen, etwa durch Beaufschlagung mit Luft. Auf diese Weise kann eine gleichmäßige Erwärmung der Kunststoffvorformlinge entlang deren Wandung erreicht werden.

Wie eingangs erwähnt, sollen die Kunststoffvorformlinge an bevorzugten Bereichen 10a erwärmt werden, hier an den in Figur 1 gezeigten Bereichen. Zu diesem Zweck werden die Kunststoffvorformlinge in ihrer Drehung ausgerichtet, sodass manche Abschnitte 10a stärker erwärmt werden als andere.

Die so erwärmten Kunststoffvorformlinge werden mittels einer Transporteinrichtung 14, wie einem Transportstern an die in ihrer Gesamtheit mit 4 bezeichnete Umformungseinrichtung übergeben. Diese weist eine Vielzahl von Umformungsstationen 40 auf, die an einer Transporteinrichtung 43 wie einem Blasrad angeordnet ist. In diesen Umformungsstationen bzw. in Blasformen werden die Kunststoffvorformlinge eingegeben und zu Behältnissen umgeformt.

Zwischen der Erwärmungseinrichtung und der Umformungseinrichtung können auch mehrere Transporteinrichtungen wie etwa Transportsterne, beispielsweise wenigstens zwei und bevorzugt wenigstens drei Transporteinrichtungen angeordnet sein.

In den mit K gekennzeichneten Bereich kann eine Korrektur der Drehstellung der Kunststoffvorformlinge vorgenommen werden. In der Umformungseinrichtung 4 werden die stärker erwärmten Oberflächen der Kunststoffvorformlinge an den jeweils längeren Seiten der Blasformen ausgerichtet. Bevorzugt werden die Kunststoffvorformlinge derart ausgerichtet, dass eine Trennseite bzw. Trennebene an der Schmalseite des Behältnisses angeordnet ist. Das Bezugszeichen 28 kennzeichnet grob schematisch eine Antriebseinrichtung bzw. Dreheinrichtung zum Drehen der Kunststoffvorformlinge 10 bezüglich ihrer Längsrichtungen. Dabei kann diese Antriebseinrichtung beispielsweise als Zahnstange ausgeführt sein, welche mit Zahnrädern (nicht gezeigt), welche den einzelnen Halteeinrichtungen der Kunststoffvorformlinge zugeordnet sind, ineinandergreift.

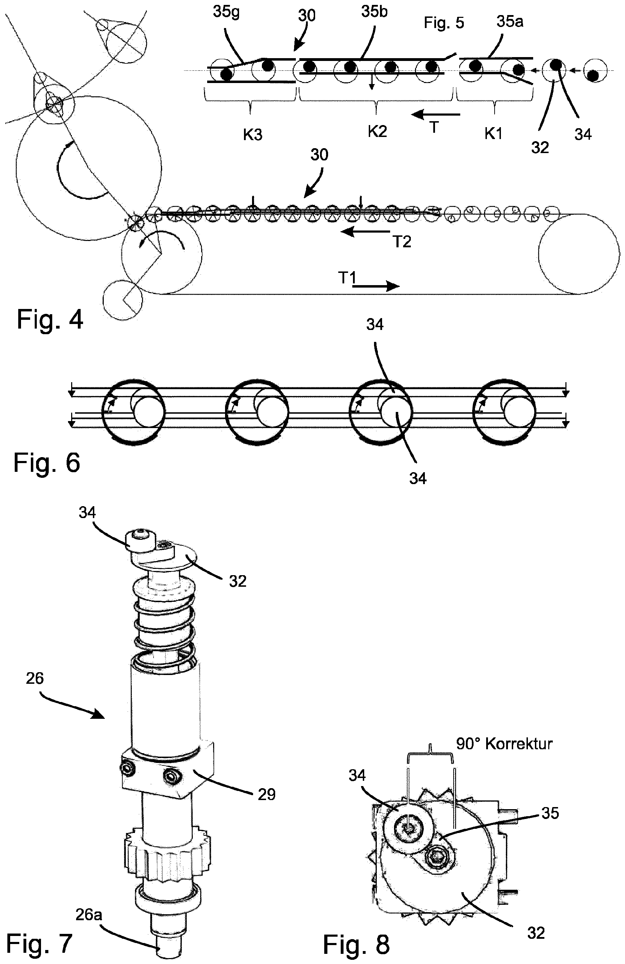

Bevorzugt sind die Halteeinrichtungen jeweils mit einer Kopplungseinrichtung ausgestattet (nicht gezeigt), welche eine Kopplung der Drehbewegung des Zahnrads und der einzelnen Halteelemente wie Haltedorne aufheben kann, so dass wenigstens abschnittsweise die Halteeinrichtungen 26a (vgl. Fig. 7) frei drehbar sind.

Das Bezugszeichen 40 kennzeichnet eine Ausrichteinrichtung, welche dazu dient, die Drehstellung der Kunststoffvorformlinge gegenüber den sie haltenden Halteeinrichtungen auszurichten. Diese Ausrichteinrichtung 40 weist bevorzugt eine Inspektionseinrichtung 42 auf, welche eine Drehstellung der Kunststoffvorformlinge 10 erfasst. Daneben ist eine Dreheinrichtung vorgesehen, welche die Drehstellung der Kunststoffvorformlinge ändert, insbesondere die Kunststoffvorformlinge in eine Solldrehposition dreht.

Das Bezugszeichen 46 kennzeichnet eine Vorformlingszuführeinrichtung wie eine Zuführschiene, welche die Kunststoffvorformlinge 10 hintereinander der Ausrichteinrichtung 40 zuführt. Das Bezugszeichen 48 kennzeichnet eine Vereinzelungseinrichtung, welche die in einer Reihe zugeführten Kunststoffvorformlinge 10 vereinzelt. Bei dieser Vereinzelungseinrichtung kann es sich um einen Sägezahnstern handeln.

Das Bezugszeichen 50 kennzeichnet eine optionale Drehstellungsausrichtungseinrichtung, welche anstelle oder zusätzlich zu der Ausrichteinrichtung vorgesehen sein kann. Diese Drehstellungsausrichtungseinrichtung ist dabei bevorzugt in einem Umlenkbereich der Erwärmungseinrichtung 2 angeordnet. Das Bezugszeichen 52 kennzeichnet eine Inspektionseinrichtung, welche eine Drehstellung der (von den Halteeinrichtungen wie insbesondere Haltedornen) gehaltenen Kunststoffvorformlinge 10 erfasst.

Das Bezugszeichen 54 kennzeichnet eine Entkopplungseinrichtung, welche eine Kopplung zwischen der Antriebseinrichtung 28 und den Halteeinrichtungen zumindest kurzzeitig aufhebt so dass die Kunststoffvorformlinge frei bezüglich ihrer Längsrichtungen sind. Das Bezugszeichen 56 kennzeichnet eine Drehstellungsanpassungseinrichtung, welche eine Drehstellung der Kunststoffvorformlinge auf eine Sollposition anpasst.

Es wäre jedoch auch möglich, dass in dem Bereich der Umlenkung die Antriebseinrichtung wie etwa eine Zahnstange nicht vorhanden ist und aus diesem Grunde die Halteeinrichtungen mit den daran angeordneten Kunststoffvorformlingen frei drehbar sind.

Figur 2 zeigt eine Darstellung einer Halteeinrichtung 26. Diese weist einen Träger 29 auf, der an einem umlaufenden Transportmittel wie einer Transportkette angeordnet sein kann. Das Bezugszeichen 32 kennzeichnet eine drehbare Platte, an der eine Kurvenrolle 34 angeordnet ist. Diese Platte ist dabei bezüglich der Längsrichtung L drehbar. Diese Längsrichtung entspricht auch der Längsrichtung des (nicht gezeigten) Kunststoffvorformlings.

Das Bezugszeichen 36 kennzeichnet ein Zahnrad bzw. einen Zahnkranz, der bezüglich einer (nicht gezeigten) stationären Zahnstange abrollen kann bzw. in diese eingreifen kann. Zwischen diesem Zahnkranz und dem (nicht gezeigten) Haltedorn kann eine Kopplungseinrichtung (nicht gezeigt) angeordnet sein, welche die Drehbewegung des Zahnkranzes von der Drehbewegung des Kunststoffvorformlings entkoppeln kann.

Das Bezugszeichen 37 kennzeichnet eine Ausrichtfläche, welche zu einer Vorausrichtung der Drehstellung des Kunststoffvorformlings dient. Auf diese Weise kann eine definierte Drehstellung des Kunststoffvorformlings erreicht werden.

Figur 3 zeigt eine Draufsicht auf die in Figur 2 gezeigte Halteeinrichtung. Auch hier ist wieder die Kurvenrolle 34 vorgesehen, welche an der drehbaren Platte 32 angeordnet ist. Auch ist das Zahnrad 36 zu erkennen.

Das Bezugszeichen P1 kennzeichnet ein Verfahrweg einer entsprechenden Führungskurve, wenn eine Winkelkorrektur, beispielsweise um 90° vorgenommen werden soll. Das Bezugszeichen S1 kennzeichnet eine Kurvenstellung bei einem gerichteten heizen bzw. einer bevorzugten Erwärmung bestimmter Bereiche des Kunststoffvorformlings.

Figur 4 zeigt eine Detaildarstellung der in Figur 1 gezeigten Vorrichtung. Dabei kennzeichnet das Bezugszeichen 30 eine Stelleinrichtung, welche zur Ausrichtung der Kunststoffvorformlinge bzw. deren Drehstellung dient. Bevorzugt ist diese Stelleinrichtung in der zweiten Hälfte des Transportpfades, entlang dessen die Kunststoffvorformlinge während ihrer Erwärmung transportiert werden, angeordnet.

Figur 5 zeigt eine detaillierte Darstellung dieser Stelleinrichtung. Diese weist hier entlang des Transportpfads T hintereinander angeordnete Kurvensegmente 35a, 35b und 35c auf. Dabei kennzeichnet das Bezugszeichen 35a eine Fangkurve, welche dazu geeignet und bestimmt ist, die Kurvenrolle 34 einzufangen bzw. in jeder beliebigen Position zu erfassen. In dieser Fangkurve erfolgt eine Vorausrichtung der Kurvenrolle 34. An diese Fangkurve 35a schließt sich eine Prozesskurve bzw. ein Haltekurvenabschnitt 35b an, innerhalb derer bevorzugt eine Erwärmung der Kunststoffvorformlinge in der gegebenen Position stattfindet.

An die Prozesskurve bzw. den Haltekurvenabschnitt 35b schließt sich eine Übergabekurve 35g an, welche die Drehstellung der Kunststoffvorformlinge in einer gewünschten Form ausrichtet, um so die Kunststoffvorformlinge an einer weitere Transporteinrichtung 14 zu übergeben. Bei einer bevorzugten Ausführungsform sind die Positionen der Prozesskurve und/oder der Übergabekurve veränderbar, um so eine Anpassung der Drehstellung an unterschiedliche Prozessbedingungen zu erreichen.

Bei einer weiteren bevorzugten Ausführungsform weist die die Vorrichtung eine Antriebseinrichtung auf um die Prozesskurve und/oder die Übergabekurve zu verstellen. So kann beispielsweise eine elektromotorische Antriebseinrichtung vorgesehen seine, welche eine Verstellung der Prozesskurve und/oder der Übergabekurve bewirkt.

Figur 6 veranschaulicht die Übergabekurve, mittels derer eine Spindelrotation in einem Uhrzeigersinn (Draufsicht) eingeleitet wird. Dies hat zur Folge, dass die Ofen-äußere Seite des Kunststoffvorformlings in der Blasform entgegen der Rotationsrichtung des Blasrades ausgerichtet sein wird.

Figur 7 zeigt eine weitere Darstellung der Halteeinrichtung. Dabei ist auch hier wieder die Führungsrolle 34 auf der drehbaren Platte 32 dargestellt. Das Bezugszeichen 26A kennzeichnet einen Dorn, der in die Mündungen der Kunststoffvorformlinge eingreift, um diese so zu halten. Dabei kann dieser Dorn 26a auch Klemmmechanismen aufweisen, welche zum Einspannen des Kunststoffvorformlings dienen.

Figur 8 zeigt eine Draufsicht auf die in Figur 7 gezeigte Halteeinrichtung. Dabei ist auch hier wieder die Führungsrolle 34 auf einem Arm 35 angeordnet, der wiederum an der Platte 32 befestigt ist. Durch die Führungskurven ist eine 90° Korrektur der Drehstellung des Spindelantriebs bzw. der Führungsrolle möglich.

Aufgrund der bevorzugt einstellbaren bzw. verschiebbaren Prozesskurve bzw. dem Haltekurvenabschnitt 35b (vgl. Figur 5) können alle im Nachgang beschriebenen Konzepte auch zur Regelung bzw. Einstellung des mittleren Übergabewinkels genutzt werden. Hierzu wird bevorzugt der Antrieb der Prozesskurve in Abhängigkeit von einem gemessenen Übergabewinkel nachjustiert.

Auf diese Weise kann beispielsweise eine Prozesskontrolle von Preferential Heating Maschinen erfolgen (zum Beispiel um einem Drift des Übergabewinkels während des Warmfahrens des Ofens entgegenzuwirken).

Daneben können jedoch auch Neukundenobjekte an entsprechenden Maschinen, welche ein bevorzugtes Erwärmen erlauben genutzt werden.

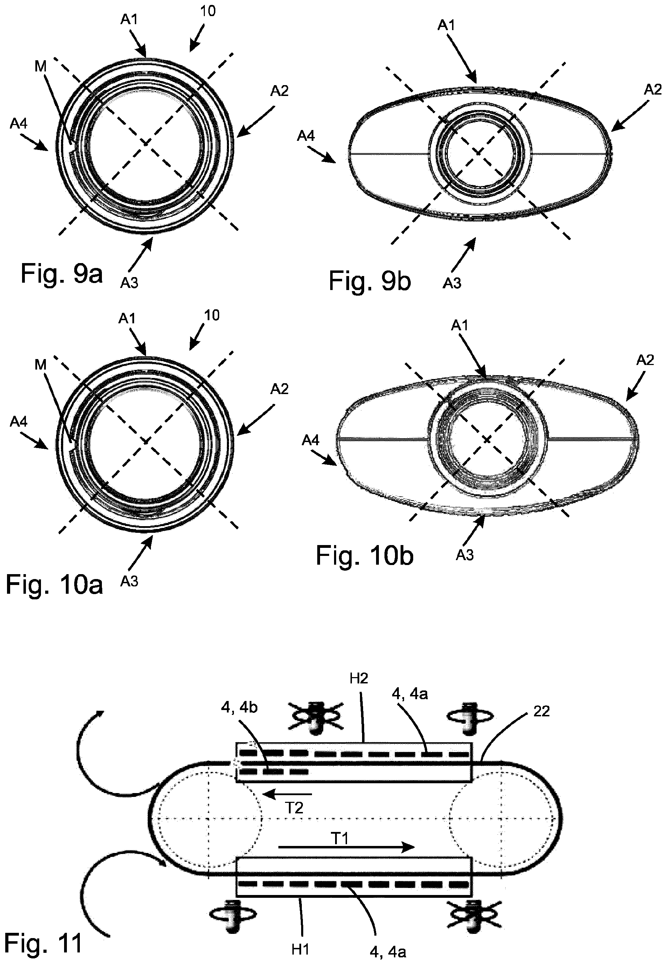

Die Fig. 9a, b zeigen eine Veranschaulichung zur Herstellung eines Kunststoffbehältnisses. Die Herstellung dieses Behältnisses ist auch mit der in den Fig. 1 - 8 gezeigten Vorrichtung möglich. Fig. 9a zeigt dabei eine Draufsicht auf einen zu erwärmenden Kunststoffvorformling 10. Dieser weist an seiner Außenoberfläche vier Abschnitte A1, A2, A3 und A4 auf. Dabei werden die Abschnitte A1 und A3 hier stärker erwärmt als die Abschnitte A2 und A4. Die stärker erwärmten Abschnitte A1 und A3 führen bei der Umformung zu den längeren Behältnisseiten A1 und A3 und die weniger erwärmten Abschnitte zu den kürzeren Behältnisseiten A2 und A4 (vgl. Fig. 9b). Das Bezugszeichen M kennzeichnet eine an dem Kunststoffvorformling angeordnete Markierung, welche zur Ausrichtung der Drehstellung verwendet werden kann.

Die Fig. 10a,b zeigen eine Veranschaulichung zur Herstellung eines Kunststoffbehältnisses. Die Herstellung dieses Kunststoffbehältnisses ist auch mit der in den Fig. 1 - 8 gezeigten Vorrichtung möglich. Hier werden auch die Abschnitte A1 und A3 unterschiedlich erwärmt (die Abschnitte A2 und A4 jedoch gleichartig und geringer). Genauer wird hier der Abschnitt A3 noch stärker erwärmt als der Abschnitt A1. Entsprechend ergeben sich auch ein (gegenüber den Abschnitten A2 und A4 stärker verstreckter Abschnitt A1 und ein gegenüber diesem Abschnitt A1 noch stärker verstreckter Abschnitt A3 und damit insgesamt ein asymmetrisch geformtes Kunststoffbehältnis.

Fig. 11 zeigt eine schematische Darstellung einer Vorrichtung zum Erzeugen derartiger ovaler Querschnitte. Im Detail wurden die einzelnen Merkmale dieser Vorrichtung in den Fig. 1 - 8 beschrieben, sodass hierauf Bezug genommen wird.

Dabei werden Kunststoffvorformlinge zunächst durch eine erste Heizgasse H1 bzw. entlang des ersten Transportpfadabschnitts T1 geführt in welcher diese einseitig von Erwärmungseinheiten bestrahlt und zugleich rotiert werden, um das erforderliche thermische Grundniveau für die Verstreckung im anschließenden Blasprozess zu erreichen. Nachdem dieses erreicht wurde, wird die Rotation gestoppt und die Kunststoffvorformlinge werden durch eine Heizgasse H2 genauer, den linken Teil der Heizgasse 2 mit beidseitiger Bestrahlung geführt, d.h. entlang des Transportpfadabschnitts T2. Sollte es erforderlich sein, dass die in diesem Zuge erwärmten Seiten der Kunststoffvorformlinge nicht die gleiche Temperatur aufweisen, so ist dies über die Strahlerleistung steuerungstechnisch sehr leicht umsetzbar.

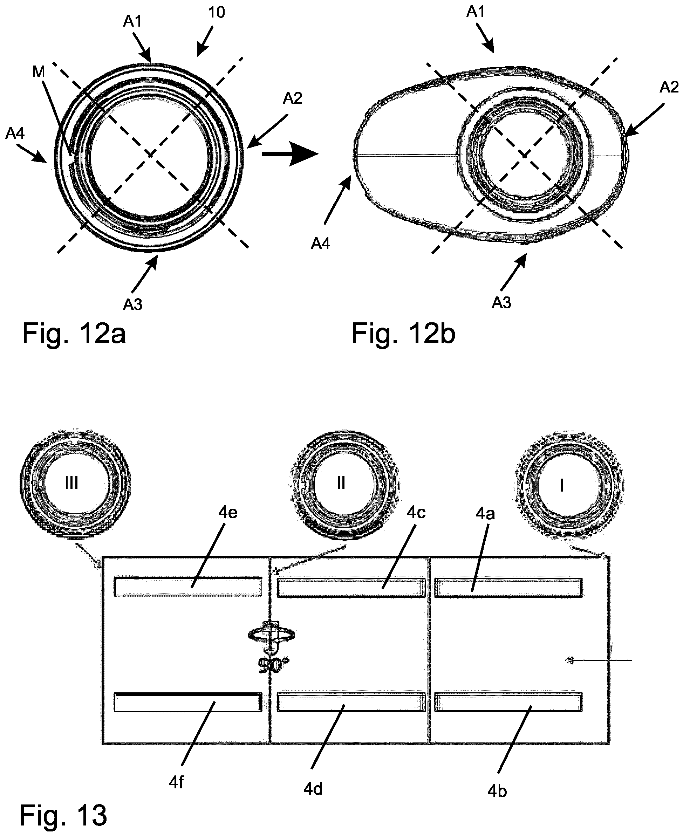

Die Fig. 12a, 12b veranschaulichen die Herstellung die Herstellung ovaler und asymmetrischer Kunststoffbehältnisse.

Zur Produktion ungleichmäßig geformter, insbesondere ovaler Behälter mit asymmetrischer kurzer Behälterseite, werden zwei gegenüberliegende Abschnitte A1 und A3 mit höchster Temperatur und zwei gegenüberliegende Preformseiten mit mittlerer (Abschnitt A4) und niedrigster Temperatur (Abschnitt A2) benötigt. Diese Wärmeverteilung ist nicht über die Anpassung der Strahlerleistung alleine erreichbar.

Bevorzugt stellen ergeben sich zwischen den Umfangsabschnitten, bzw. zwischen den genannten Abschnitten und den zu diesen Abschnitten benachbarten Abschnitten (A1 zu A2, A2 zu A3 usw.) Übergangsbereiche. Diese Übergangsbereiche ergeben sich unter anderem aufgrund der nicht nur orthogonal einfallenden IR-Strahlung aber auch aufgrund der Wärmeleitung und weiterer Zusammenhänge.

Fig. 13 veranschaulicht das im Rahmen der Erfindung vorgeschlagene Verfahren zur Herstellung solcher Behältnisse. Um die erforderliche Wärmeverteilung zur Produktion ovaler und zugleich auf kurzer Behälterseite asymmetrischer Behälter zu erreichen wird ein Schwenk im Preferential Heating Modul d.h. der Erwärmungseinrichtung 2 vorgeschlagen.

Zunächst werden die bereits gleichmäßig grunderwärmten Kunststoffvorformlinge auf der rechten Seite zugeführt (I). Dann wird die Drehstellung gehalten und diese Kunststoffvorformlinge werden (II) an den Erwärmungseinheiten 4a - 4d vorbeitransportiert und von beiden Seiten her erwärmt. Es ergibt sich eine deutlich stärkere Erwärmung an den oben gezeigten Abschnitten A1 und A3.

Falls gewünscht, können auch die Erwärmungseinheiten 4a,c eine andere Strahlerleistung abgeben als die Erwärmungseinheiten 4b,d. Auf diese Weise kann eine asymmetrische Erwärmung der Abschnitte A1 und A3 erreicht werden.

In einem weiteren Schritt werden die Kunststoffvorformlinge um 90° gedreht (III) und nunmehr werden durch die Erwärmungseinheiten 4e, 4f die oben gezeigten Abschnitte A2 und A4 stärker erwärmt.

Am Austritt der Erwärmungseinrichtung ergeben sich daher Kunststoffvorformlinge mit zwei stark erwärmten Abschnitten (A1, A3), einem mittelmäßig erwärmten Abschnitt (A2) und einem schwach erwärmten Abschnitt (A4).

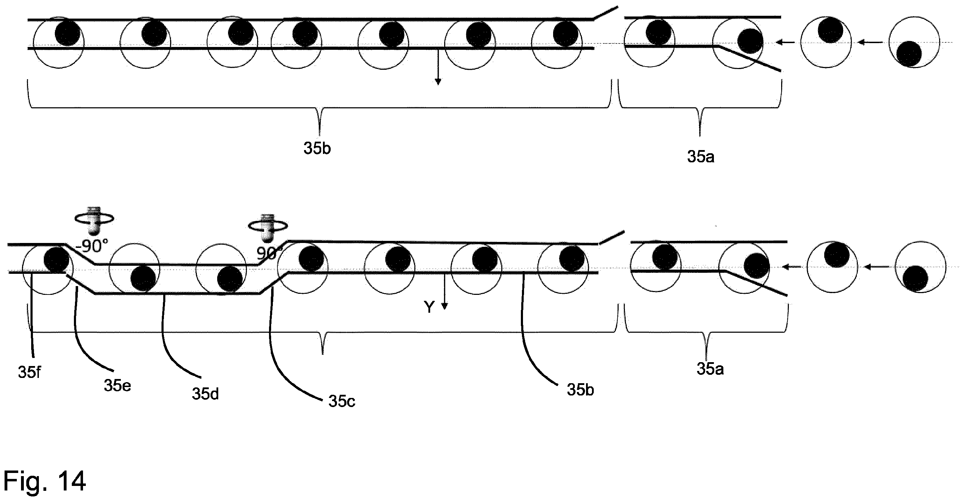

Fig. 14 zeigt eine Darstellung einer Stelleinrichtung zur Umsetzung des in Fig. 13 beschriebenen Verfahrens.

Wie bereits oben beschrieben, wird zur Führung der Preformen in der Erwärmungseinrichtung 2 eine Anlenkrolle am oberen Ende der Spindeln genutzt. Aufgrund der ohnehin bereits im Einsatz befindlichen Anlenkrollen an den Spindeln kann der 90° - Schwenk sehr leicht über die Führungskurve oberhalb der Erwärmungseinrichtung umgesetzt werden. Hierzu kann die bisherige Soll Position von 45 gegenüber dem Spindelmittelpunkt außen nacheilend auf 45 innen nacheilend geändert werden. Um am bisherigen Gesamtkonzept festzuhalten, empfiehlt es sich am Ende des Preferntial Heating Prozess die bisherige Soll Lage durch einen -90 - Schwenk wieder einzunehmen.
Die obere Teildarstellung in Fig. 14 zeigt die Vorgehensweise nach dem internen Stand der Technik der Anmelderin.

In der unteren Darstellung ist ein erfindungsgemäßes Verfahren dargestellt. Die von rechts kommenden Kunststoffvorformlinge können noch beliebige Ausrichtungen aufweisen. Ein Fangkurvenabschnitt richtet die Führungsrolle derart aus, dass diese gegenüber dem Spindelmittelpunkt um 45° nach außen nacheilt.

Ein erster Haltekurvenabschnitt 35b hält die Halteeinrichtungen bzw. Spindeln in dieser Position und führt die Kunststoffvorformlinge so an den in Fig. 13 gezeigten Erwärmungseinheiten 4a - 4d vorbei. Der Führungskurvenabschnitt 35b ist jedoch bevorzugt entlang des Pfeils Y verstellbar, so dass dieser Stellwinkel auch verändert werden kann.

In einem Übergangsabschnitt 35c wird die Drehstellung der Kunststoffvorformlinge um 90° verdreht, was dadurch erfolgt, dass die Führungsrolle in eine Position gebracht wird, in der sie gegenüber dem Spindelmittelpunkt um 45° nach innen nacheilt.

In dieser Drehstellung werden nunmehr die Kunststoffvorformlinge durch die in Fig. 13 gezeigten Erwärmungseinheiten 4e, 4f erwärmt, was während des Transports mit dem Haltekurvenabschnitt 35d erfolgt. In einem weiteren optional vorhandenen Übergangsabschnitt werden die Kunststoffvorformlinge um -90° gedreht um wieder die Ausgangsstellung nach dem Fangkurvenabschnitt 35a aufzuweisen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Herstellen von Kunststoffbehältnissen, wobei Kunststoffvorformlinge (10) mittels einer Erwärmungseinrichtung (1) erwärmt werden und anschließend diese erwärmten Kunststoffvorformlinge (10) zu den Kunststoffbehältnissen (15) umgeformt werden, wobei die Kunststoffvorformlinge während ihrer Erwärmung entlang eines vorgegebenen Transportpfads (T1, T2) transportiert werden und wobei die Kunststoffvorformlinge während des Transports entlang eines ersten Transportpfadabschnitts (T1) bezüglich ihrer Längsachse rotiert werden um auf diese Weise eine gleichmäßige Erwärmung der Kunststoffvorformlinge in Umfangsrichtung zu erreichen und wobei die Kunststoffvorformlinge während ihres Transports entlang eines zweiten Transportpfadabschnitts (T2) wenigstens abschnittsweise in einer vorgegebenen ersten Drehstellung bezüglich ihrer Längsachse verbleiben so dass erste vorgegebene Umfangsabschnitte (A1, A3) der Kunststoffvorformlinge (10) unterschiedlich erwärmt werden als zweite vorgegebene Umfangsabschnitte (A2, A4) der Kunststoffvorformlinge,
**dadurch gekennzeichnet, dass**
die Kunststoffvorformlinge während ihres Transports entlang des zweiten Transportpfadabschnittes (T2) wenigstens abschnittsweise in einer vorgegebenen zweiten Drehstellung bezüglich ihrer Längsachse verbleiben wobei sich die erste und die zweite Drehstellung um einen vorgegebenen Differenzwinkel voneinander unterscheiden.

2. Verfahren nach Anspruch 1,
**dadurch gekennzeichnet, dass**
der Differenzwinkel größer als 20°, bevorzugt größer als 40°, bevorzugt größer als 60°, bevorzugt größer als 70° und besonders bevorzugt größer als 80° ist und/oder dass der Differenzwinkel kleiner als 160°, bevorzugt kleiner als 140°, bevorzugt kleiner als 120°, bevorzugt kleiner als 110° und besonders bevorzugt kleiner als 100° ist und dass besonders bevorzugt der Differenzwinkel 90° beträgt.

3. Verfahren nach wenigstens einem der vorangegangenen Ansprüche,
**dadurch gekennzeichnet, dass**
die Kunststoffvorformlinge mittels einer mechanischen Stelleinrichtung von der ersten Drehstellung in die zweite Drehstellung gedreht werden.

4. Verfahren nach wenigstens einem der vorangegangenen Ansprüche,
**dadurch gekennzeichnet, dass**
während eines Transports der Kunststoffvorformlinge (10) in dem zweiten Transportpfadabschnitt einander gegenüberliegende Umfangsabschnitte wenigstens abschnittsweise unterschiedlich erwärmt werden.

5. Verfahren nach wenigstens einem der vorangegangenen Ansprüche,
**dadurch gekennzeichnet, dass**
die Umformungseinrichtung aus den Kunststoffvorformlingen (10) Kunststoffbehältnisse mit einem von einem kreisförmigen Querschnitt abweichenden Querschnitt formt.

6. Verfahren nach wenigstens einem der vorangegangenen Ansprüche,
**dadurch gekennzeichnet, dass**
die Kunststoffvorformlinge wenigstens abschnittsweise während ihres Transports entlang des Transportpfads an ihrer Außenoberfläche gekühlt werden.

7. Verfahren nach wenigstens einem der vorangegangenen Ansprüche,
**dadurch gekennzeichnet, dass**
eine Erfassungseinrichtung eine Drehstellung der Kunststoffvorformlinge bezüglich deren Längsrichtung erfasst.

8. Vorrichtung (50) zum Herstellen von Kunststoffbehältnissen, mit einer Erwärmungseinrichtung, welche Kunststoffvorformlinge (10) erwärmt, wobei die Erwärmungseinrichtung (1) eine Transporteinrichtung aufweist, welche die Kunststoffvorformlinge während ihrer Erwärmung entlang eines vorgegebenen Transportpfads (T1, T2) transportiert, wobei die Erwärmungseinrichtung wenigstens eine Erwärmungseinheit aufweist, welche die Kunststoffvorformlinge (10) durch Beaufschlagung mit elektromagnetischer Strahlung erwärmt und wobei die Erwärmungseinrichtung (1) eine Dreheinrichtung (28) aufweist, welche die Kunststoffvorformlinge (10) während des Transports entlang eines ersten Transportpfadabschnitts (T1) bezüglich ihrer Längsachse rotiert um auf diese Weise eine gleichmäßige Erwärmung der Kunststoffvorformlinge (10) in Umfangsrichtung zu erreichen und wobei die Erwärmungseinrichtung (1) eine Stelleinrichtung (30) aufweist, welche bewirkt, dass die Kunststoffvorformlinge (10) während ihres Transports entlang eines zweiten Transportpfadabschnitts (T2) wenigstens abschnittsweise in einer vorgegebenen und bevorzugt im wesentlichen festen ersten Drehstellung bezüglich ihrer Längsachse transportiert werden, so dass erste vorgegebene Umfangsabschnitte (A1, A3) der Kunststoffvorformlinge (10) unterschiedlich erwärmt werden als zweite vorgegebene Umfangsabschnitte (A2, A4) der Kunststoffvorformlinge,
**dadurch gekennzeichnet, dass**
die Stelleinrichtung (30) bewirkt, dass die Kunststoffvorformlinge während ihres Transports entlang des zweiten Transportpfadabschnittes (T2) wenigstens abschnittsweise in einer vorgegebenen und bevorzugt im wesentlichen festen zweiten Drehstellung bezüglich ihrer Längsachse transportiert werden wobei sich die erste und die zweite Drehstellung um einen vorgegebenen Differenzwinkel voneinander unterscheiden.

9. Vorrichtung nach dem vorangegangenen Anspruch,
**dadurch gekennzeichnet, dass**
die Stelleinrichtung wenigstens eine insbesondere in der Transportrichtung der Kunststoffvorformlinge stationär angeordnete Führungskurve (35) aufweist, welche einen Transport der Kunststoffvorformlinge in einer vorbestimmten Drehstellung ermöglicht.

10. Vorrichtung nach dem vorangegangenen Anspruch,
**dadurch gekennzeichnet, dass**
die Führungskurve (35) wenigstens drei aufeinanderfolgende Kurvenabschnitte (35a, 35b, 35d) aufweist, wobei bevorzugt einer dieser Kurvenabschnitte (35a) ein Fangkurvenabschnitt (35a) ist, welcher die Kunststoffvorformlinge hinsichtlich der Drehstellung bzgl. der Längsachse der Kunststoffvorformlinge ausrichtet, wenigstens ein Kurvenabschnitt ein erster Haltekurvenabschnitt (35b) ist, der die Kunststoffvorformlinge (10) während ihres Transports in der ersten Drehstellung hält und wenigstens ein Kurvenabschnitt (35d) ein zweiter Haltekurvenabschnitt (35d) ist, der die Kunststoffvorformlinge (10) während ihres Transports in der zweiten Drehstellung hält.

11. Vorrichtung (1) nach dem vorangegangenen Anspruch,
**dadurch gekennzeichnet, dass**
die Führungskurve (35) einen Überführungsabschnitt (35c) aufweist, der die Kunststoffvorformlinge von der ersten Drehstellung in die zweite Drehstellung dreht und bevorzugt die Führungskurve (35) einen weiteren Überführungsabschnitt (35e) aufweist, der die Kunststoffvorformlinge (10) von der zweiten Drehstellung in eine weitere und insbesondere wieder in die erste Drehstellung dreht.

12. Vorrichtung (1) nach wenigstens einem der vorangegangenen Ansprüche,
**dadurch gekennzeichnet, dass**
wenigstens abschnittsweise in dem zweiten Transportpfadabschnitt beidseitig des Transportpfads der Kunststoffvorformlinge Erwärmungseinheiten (4a, 4b) angeordnet sind, wobei diese Erwärmungseinheiten (4a, 4b) bevorzugt unabhängig voneinander steuerbar sind.

13. Vorrichtung (1) nach wenigstens einem der vorangegangenen Ansprüche,
**dadurch gekennzeichnet, dass**
die Vorrichtung (1) wenigstens eine Inspektionseinrichtung (42) aufweist, welche dazu geeignet und bestimmt ist, eine Drehstellung der Kunststoffvorformlinge bezüglich ihrer Längsrichtung zu erfassen.

14. Vorrichtung (1) nach wenigstens einem der vorangegangenen Ansprüche,
**dadurch gekennzeichnet, dass**
die Vorrichtung eine Umformungseinrichtung (20) aufweist, welche die von der Erwärmungseinrichtung erwärmten Kunststoffvorformlinge zu Kunststoffbehältnissen umformt, wobei diese Umformungseinrichtung (20) bevorzugt dazu geeignet und bestimmt ist, Kunststoffbehältnisse mit einem von einem kreisförmigen Querschnitt abweichenden Querschnitt herzustellen.
